# FASCICULE DE BREVET EUROPEEN

(11) **EP 3 847 048 B1**
(45) Date de publication et mention de la délivrance du brevet: **02.11.2022**
(21) Numéro de dépôt: 19765244.9
(22) Date de dépôt: 06.09.2019
(51) Int. Cl.: B60K 15/03, B60K 15/04

(54) **AGENCEMENT D'UNE CAISSE DE VÉHICULE COMPORTANT UN DISPOSITIF DE FIXATION D'AU MOINS UN CONDUIT POUR LE STOCKAGE D'ÉNERGIE**
ANORDNUNG EINER FAHRZEUGKAROSSERIE MIT EINER VORRICHTUNG ZUR BEFESTIGUNG VON MINDESTENS EINER LEITUNG ZUR ENERGIESPEICHERUNG
ARRANGEMENT OF A VEHICLE BODY, COMPRISING A DEVICE FOR ATTACHING AT LEAST ONE CONDUIT FOR ENERGY STORAGE

(30) Priorité: 06.09.2018 FR 1870993
(43) Date de publication de la demande: 14.07.2021
(73) Titulaire: Renault s.a.s, 92100 Boulogne Billancourt (FR)
(72) Inventeur: MACEASA, Stela, ARGES PITESTI (RO); VALEANU, Cristian, Buftea Ilfov (RO)
(74) Mandataire: Renault Group
(86) Numéro de dépôt international: PCT/EP2019/073800
(87) Numéro de publication internationale: WO 2020/049140

(56) Documents cités:
- EP-A1- 0 060 494
- US-A1- 2014 070 561
- US-A1- 2017 334 287

## Description

L'invention est du domaine de la construction automobile. Elle concerne un agencement d'une caisse de véhicule comportant un dispositif de fixation d'au moins un conduit pour le stockage d'énergie. L'invention concerne aussi un véhicule ayant un tel agencement.

L'invention concerne plus particulièrement un agencement d'une caisse de véhicule, notamment une automobile, comportant un dispositif de fixation d'au moins un conduit à la caisse, le conduit rendant apte le stockage en énergie, la caisse comprend une ouverture dans laquelle est disposé le dispositif de fixation. Le document US2017334287-A1 décrit un agencement selon le préambule de la revendication 1.

Il est connu des véhicules dont le groupe moto propulseur peut être alimenté par deux types de carburant différents, le circuit d'alimentation en carburant étant à cet effet conçu pour accepter cette flexibilité. Chacun des carburants est alors stocké dans un réservoir qui lui est dédié, le réservoir étant alimenté en carburant par un conduit dont l'extrémité comprend un orifice de remplissage qui est fixé à un support. Le support est destiné à la fixation du conduit à la caisse du véhicule. L'orifice de remplissage peut intégrer une interface de fixation pour un bouchon laquelle rend apte la fermeture et l'étanchéité de l'orifice. Le support peut également être du type d'un bol, en ce sens qu'il présente un profil sensiblement incurvé, réalisé en matière plastique, sur lequel est monté à articulation une trappe à carburant. Un bol de trappe à carburant est aussi conformé pour collecter le carburant en cas de débordement afin de l'évacuer hors du véhicule. Le bol de trappe à carburant peut aussi comprendre une ouverture dédiée à la fixation d'un conduit de mise à l'air du réservoir, un tel conduit pouvant s'étendre linéairement le long du conduit de remplissage en carburant du réservoir.

Pour éviter des erreurs de carburant, l'orifice de remplissage est assujetti au type de carburant, par exemple en modulant le diamètre de l'orifice de remplissage de telle sorte que par exemple, un pistolet de remplissage en diesel ne puisse pas être inséré à l'intérieur d'un orifice de remplissage en essence. Une telle normalisation des moyens de remplissage touche également le cas des véhicules fonctionnant à partir d'un carburant à l'état gazeux.

La réduction des rejets de polluant pousse l'industrie automobile vers le déploiement de technologie verte basée sur l'utilisation de gaz naturel pour véhicule, dont l'acronyme est GNV ou l'utilisation de l'agent additionnel de traitement pour les véhicules à moteur diesel.

A l'instar des véhicules à énergie fossile, le conduit de remplissage en GNV d'un réservoir doit répondre à des contraintes de conception qui sont principalement liées à la sécurité et l'étanchéité à réaliser entre une bride de remplissage prolongeant vers l'extérieur le conduit de remplissage et un embout relié à une réserve de station de rechargement. Pour répondre à cette exigence de conception, la bride de remplissage en GNV est fixée à un support, lequel peut être le support de conception identique à celui utilisé pour fixer un conduit de remplissage en carburant de type diesel ou essence.

Contrairement à la conception d'un orifice de remplissage de carburant liquide pour véhicule à moteur essence ou diesel, la bride de remplissage en GNV s'étend en saillie hors du support de manière plus prononcée, ce qui contrainte l'architecture du bol de trappe à carburant à respecter une profondeur prédéfinie. Il a été relevé qu'un des inconvénients de conception d'un tel bol de trappe à carburant réside dans la profondeur même de ce dernier de manière à disposer la trappe à carburant fermée suffisamment éloignée de la bride de remplissage en GNV. Un tel éloignement peut être d'environ 10 mm, de sorte que malgré les dispersions d'assemblage, la trappe à carburant fermée reste toujours éloignée de la bride de remplissage en GNV.

Il a en outre été relevé que pour des raisons de communalisation de pièces dans une gamme de véhicules, un support pour conduit de remplissage doit d'être conçu pour permettre la fixation d'un conduit de remplissage comme cela est le cas d'un véhicule fonctionnant avec de l'essence ou du diesel.

Pour ces mêmes raisons, le support pour conduit de remplissage doit d'être conçu aussi pour la fixation de deux conduits de remplissage dans le cas d'un véhicule pouvant fonctionner aussi bien avec de l'essence qu'avec un GNV, comme cela est le cas pour les véhicules communément appelé par le terme anglophone « Flex Fuel ». Le support pour conduit de remplissage doit aussi être conçu aussi pour la fixation de deux conduits de remplissage, l'un pour le carburant diesel, l'autre pour l'agent additionnel permettant d'obtenir un diesel additivé pour la réduction des polluants.

Quand bien même la matière plastique peut être utilisée pour la fabrication par moulage d'un support pour conduit de remplissage d'un réservoir de véhicule essence ou diesel, le recours à l'acier pour la fabrication d'un support de remplissage d'un réservoir de véhicule utilisant un GNV est privilégié.

Il a été néanmoins relevé comme inconvénient que la profondeur de l'emboutissage d'une tôle d'acier pour la fabrication d'un support, destiné à former un bol de trappe à carburant pour une bride de remplissage en GNV, ne peut être réalisé sans créer un déchirement de la tôle du fait de l'étirement de la matière, que seule une épaisseur accrue pourrait vaincre au détriment de la masse, ce qui reste à éviter du fait même du but premier qui est recherché, à savoir la réduction de la consommation du véhicule.

Le but de l'invention est de fournir un agencement d'une caisse de véhicule améliorant les inconvénients des dispositifs connus de l'état de la technique. En particulier, l'invention a pour objectif de réaliser un agencement simple et économique dans sa fabrication, et qui permettent une amélioration de la communalisation des pièces de carrosserie pour plusieurs variantes de conception d'une même gamme de véhicule.

L'objet de l'invention a ainsi trait à un agencement d'une caisse de véhicule, notamment une automobile, comportant un dispositif de fixation d'au moins un conduit à la caisse, le conduit rendant apte le stockage en énergie, la caisse comprend une ouverture dans laquelle est disposé le dispositif de fixation, le dispositif de fixation comprend un support et un renfort intérieur de support, le support étant disposé dans une ouverture d'un côté latéral de caisse, le renfort étant disposé dans une ouverture du support

Selon d'autres particularités techniques de conception, l'objet de l'invention peut comprendre les caractéristiques suivantes prises séparément ou en combinaison entre elles :
- le support peut comprendre au moins un bossage s'étendant en saillie transversale hors d'un embouti délimitant une paroi de fond dans laquelle est ménagée l'ouverture du support ;
- le support peut être lié à l'ouverture de côté de caisse par l'intermédiaire d'au moins un cordon de mastic d'étanchéité ; ce qui permet de créer une protection anticorrosion des arêtes de l'ouverture du côté latéral de caisse ;
- le renfort peut comprendre au moins une ouverture destinée à coopérer par complémentarité de forme avec une extrémité d'un conduit d'alimentation en carburant;
- le renfort peut comprendre un embouti délimitant une paroi de fond en cuvette par rapport à un contour duquel s'étend radialement au moins une languette de fixation du renfort au support ;
- chaque languette peut être approximativement plane en s'étendant dans un plan sensiblement parallèle à la paroi de fond contre laquelle elle est destinée à venir en appui;
- chaque languette peut être disposée à empilement du support selon un axe transversal, et en ce que chaque languette peut s'étendre linéairement entre deux bossages adjacents ;
- chaque languette peut être liée par au moins un point de soudure à la paroi de fond et/ou au moins un cordon de mastic d'étanchéité et/ou au moins un cordon de mastic structurant ; le cordon de mastic d'étanchéité permet de créer avantageusement une protection anticorrosion des arêtes de l'ouverture du support ;
- au moins une des languettes peut être liée par au moins un point de soudure à la fois à la doublure de caisse définissant un passage de roue arrière du véhicule et au support ;
- le renfort peut être réalisé à partir d'une plaque d'acier d'épaisseur supérieure à l'épaisseur de la plaque d'acier du support, le renfort ayant notamment une épaisseur d'environ 1,2 mm, le support ayant notamment une épaisseur de 0,65 mm.

L'invention a aussi trait à un véhicule, notamment une automobile, comportant une caisse délimitée par un côté latéral, le véhicule comprenant un agencement de caisse ayant l'une quelconque des caractéristiques susmentionnées.

Les figures annexées représentent, à titre d'exemple, un agencement d'une caisse selon un mode de réalisation de l'invention.
[Fig. 1] est une vue en perspective d'une ouverture ménagée sur un côté de caisse, dans laquelle est disposé un dispositif de remplissage en carburant de réservoirs d'un véhicule automobile.
[Fig. 2] est une vue schématique du côté de caisse conformée pour recevoir le dispositif de remplissage en carburant.
[Fig. 3] représente un support de conduits de carburant à un côté de caisse.
[Fig. 4] représente un renfort intérieur de support sur lequel chacun des conduits est apte à être disposé.

La direction selon laquelle un véhicule automobile se déplace habituellement en ligne droite est définie comme étant la direction longitudinale. Par convention, la direction perpendiculaire à la direction longitudinale, située dans un plan parallèle au sol, est nommée direction transversale. La troisième direction, perpendiculaire aux deux autres, est nommée direction verticale.

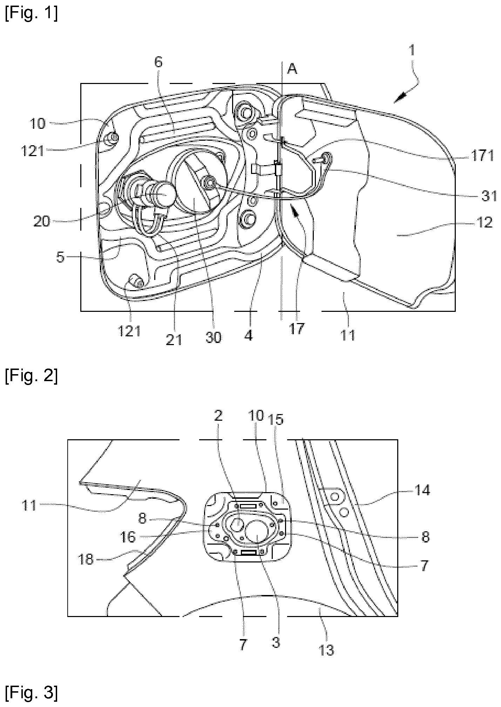

Un exemple d'un véhicule automobile équipé d'un mode de réalisation d'un dispositif 1 de fixation d'un conduit de remplissage en carburant est décrit ci-après en référence à la figure 1.

Comme illustré sur la figure 1, l'agencement d'une caisse 11 de véhicule comprend un dispositif 1 de fixation deux conduits d'alimentation en carburant, permettant de remplir un réservoir dédié auquel est relié le moteur d'entrainement du véhicule.

De manière préférentielle, l'un des conduits est destiné au remplissage d'un réservoir de carburant liquide, par exemple de l'essence, l'autre des conduits étant destiné au remplissage d'un réservoir de carburant gazeux, tel que du gaz naturel pour véhicule, connu sous l'acronyme GNV.

Selon une variante de réalisation, le conduit destiné au remplissage d'un réservoir de carburant liquide peut être remplacé par un conduit au travers duquel circule un courant électrique, tel un câble d'alimentation de batterie électrique de stockage d'électricité.

Quel que soit le type de conduit, le véhicule est à propulsion hybride, c'est-à-dire qu'il est apte à utiliser deux types distincts d'énergie pour son déplacement. L'agencement de caisse 11 comprend une ouverture 10 qui est réalisée au niveau d'un côté latéral 11 de caisse, ici le côté latéral droit, sachant qu'il pourrait tout aussi bien s'agir du côté opposé.

L'ouverture 10 est connue pour recevoir un volet articulé, bien souvent à rotation autour du côté latéral, entre une position d'ouverture pour rendre possible le stockage en énergie, et une position de fermeture selon laquelle le volet est positionné à affleurement du côté latéral de caisse. Du fait de sa fonction, le volet est qualifié de trappe à carburant.

L'ouverture 10 est située au-dessus d'un passage de roue arrière 13, longitudinalement entre un encadrement 14 de porte et une découpe 18 de feu arrière, comme cela est visible sur la figure 2.

L'agencement de caisse permet au dispositif 1 de fixation de relier un premier conduit 2 de remplissage en un premier type de carburant, au côté de caisse.

Il permet de relier un deuxième conduit 3 de remplissage en un deuxième type de carburant, au côté de caisse.

Pour ce faire, le dispositif 1 de fixation comprend un support 15 et un renfort intérieur 16 de support.

Le support 15 est réalisé en acier d'épaisseur comprise sensiblement entre 0,5 mm et 0,8 mm, de préférence de 0,65 mm.

Le renfort 16 de support est réalisé en acier d'épaisseur supérieure à celle du support 15. Le support 16 est d'épaisseur comprise approximativement entre 0,9 mm et 1,5 mm, préférentiellement de 1,2 mm.

Le support 15 comprend un bord périphérique 151 de profil sensiblement rectangulaire, comme représenté à la figure 3. Le bord périphérique 151 présente en section un rebord courbé permettant d'en augmenter sa rigidité. Le bord périphérique 151 est de profil sensiblement identique à celui de l'ouverture 10 pratiquée dans le côté latéral de caisse 11. Le bord périphérique 151 comprend quatre coins arrondis 152 reliés par paire par une portion 153 approximativement linéaire. Le bord périphérique 151 est transversalement prolongé par une paroi 154 latérale qui définit la profondeur du support 15.

Le support 15 comprend une paroi de fond 155 dans laquelle est pratiquée une ouverture 160 destinée à recevoir le renfort intérieur 16.

Chaque coin 152 comprend un bossage 156 présentant un profil transversal courbe reliant la paroi de fond 155 aux parois 154 latérales qui lui sont directement adjacentes. La partie sommitale de chaque bossage est sensiblement plane en s'étendant approximativement le long des directions longitudinale et verticale. La partie plane du bossage 156 présente, vue de face, un profil sensiblement triangulaire.

Les coins 152 supérieur et inférieur qui sont situés sur l'un des côtés latéraux du support 15, ici le côté gauche, comprennent une ouverture pour permettre de fixer un tampon d'amortissement 121 contre lequel la trappe 12 est apte à venir en appui en position de fermeture. Les coins 152 supérieur et inférieur situés sur l'autre des côtés latéraux du support comprennent des ouvertures rendant apte la fixation par vissage d'un moyen d'articulation 17 de la trappe autour de l'axe A. Un ressort 171 exerce un effort de maintien en position ouverture de la trappe 12, comme cela est rendu visible sur la figure 1.

De manière préférentielle, la partie sommitale de chaque bossage 156 est approximativement plane et s'étend dans un plan d'axes longitudinal et vertical sensiblement parallèle, au plan du côté de caisse 11. Chaque bossage 156 est disposé en retrait d'axe transversal Y par rapport au côté de caisse. Un tel écart en Y permet à la trappe 12 en position fermée de venir se loger dans l'ouverture 10 de telle sorte qu'elle vient à affleurement du côté de caisse.

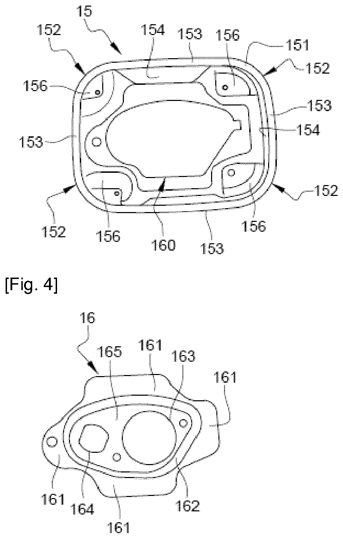

Le renfort 16 de support va à présent être décrit en relation avec la figure 4 qui montre le renfort de manière isolée.

Le renfort 16 est réalisé à partir d'une tôle d'acier qui est découpée afin de créer des languettes 161 sensiblement planes qui sont destinées à venir en appui contre le fond 155 du support. Une paroi de fond 165 est réalisée par emboutissage de sorte à former une cuvette dont le contour 162 suit approximativement le profil de l'ouverture 160 du support 15. Le renfort 160 épouse, au jeu d'assemblage près, un profil délimité par les bossages 156 et les parois 154 latérales du support 15.

La paroi de fond 165 comprend une première ouverture 163 dans laquelle est disposée l'extrémité d'un premier conduit de remplissage en carburant.

La paroi de fond 165 comprend une deuxième ouverture 164 dans laquelle est disposée l'extrémité d'un second conduit de remplissage en carburant.

Selon une variante de réalisation nous représentée, l'un des conduits pourrait être un câble de puissance dédié à l'alimentation en courant électrique d'une batterie électrique, l'autre des conduits pouvant être dédié au remplissage en carburant liquide ou gazeux, sans sortir du cadre de l'invention.

L'ensemble constitué du support 15 et du renfort 16 définit un bol de trappe à carburant à double retrait transversaux. Le support 15 comprend un fond 155 en retrait, le renfort 16 comprend un fond 165 en retrait de telle sorte qu'une fois l'assemblage à superposition du renfort 16 dans l'ouverture 160 du support 15, le bol de trappe à carburant ainsi créé à une profondeur suffisante pour permettre l'intégration des moyens d'obturation 20, 30 et la fermeture de l'ouverture 10, tout en respectant un écart en Y de la trappe 12 par rapport à l'un de ces moyens d'obturation d'au moins 5 mm à 15 mm, préférentiellement 10 mm. Un tel écart garantit une fermeture complète de la trappe 12, en ce sens qu'elle ne vienne aucunement en contact contre l'une desdits moyens d'obturation 20, 30.

Le support 15 est lié à l'ouverture 10 de côté de caisse 11 par l'intermédiaire d'au moins un cordon de mastic d'étanchéité 4, notamment un seul et unique cordon continu s'étendant linéairement le long de la surface d'appui du support 15 sur le côté de caisse 11 au niveau de l'ouverture 10.

Compte tenu de la nature des matériaux utilisés à la fabrication du support 15 et du renfort 16 intérieur, leur assemblage est réalisé par soudage.

Le support 15 est lié au côté de caisse 11 par l'intermédiaire de points de soudure 7, notamment des points de soudure électrique. Préférentiellement, au moins une languette 161 comprend deux points de soudure électrique, comme cela est le cas de la languette 161 inférieure sur la figure 2.

Le renfort 16 est lié au support 15 par l'intermédiaire des languettes 161 qui sont solidarisées par des points de soudure à la paroi de fond 155.

Un cordon de mastic structurant 6 est disposé entre la languette 161 supérieure ou inférieure, voire les deux, venant à recouvrement du fond 155. Le cordon de mastic structurant 6 permet de manière avantageuse de lier le support 15 au renfort 16 avant l'opération de soudage par points de soudure ou par dépose de cordons de soudure.

Le renfort 16 intérieur est lié au support 15 par l'intermédiaire d'au moins un cordon de mastic d'étanchéité 5, notamment un seul et unique cordon continu 5 s'étendant linéairement le long d'un bord périphérique du renfort disposé en appui contre le support 15.

Les cordons 4 et 5 de mastic d'étanchéité sont réalisés par apport de matière depuis l'extérieur du véhicule, ce qui rend le procédé de fabrication simplifié.

L'ajout de mastic d'étanchéité permet de créer une protection anticorrosion des arêtes des ouvertures, qu'il s'agisse de l'ouverture de côté de caisse 10 ou l'ouverture de renfort 160. Chaque cordon 4, 5 est appliqué après l'assemblage par les points de soudure 7, 8 et les cordons de mastic structurant 6.

L'agencement de caisse comprend un moyen d'obturation 20 du premier conduit 2 qui est relié à son embout d'extrémité par l'intermédiaire d'une attache flexible 21. Il comprend également une liaison de la trappe 12 à un deuxième moyen d'obturation 30 du deuxième conduit 3 par l'intermédiaire d'un cordon souple 31. Lesdits premier et second moyens d'obturation sont des bouchons de fermeture. Le fait d'assembler le renfort 16 intérieur au côté de caisse 11 et au support 15 par les points de soudures 7 permet de rigidifier le passage de roue arrière 13 qui est affaibli mécaniquement par la présence d'une découpe 18 de feu arrière et une découpe d'embrasure de porte 14 rapprochées.

L'agencement de caisse selon l'invention est remarquable en ce qu'il permet un montage simplifié et robuste des conduits 2, 3 de remplissage sur une structure de caisse de véhicule.

Sans sortir du cadre de l'invention, le conduit 2 pourrait être destiné au remplissage d'un agent additionnel au carburant d'un moteur diesel, à base d'urée, pour réduire les rejets de polluants.

## Revendications

1. Agencement d'une caisse (11) de véhicule, notamment une automobile, comportant un dispositif (1) de fixation d'au moins un conduit (2, 3) à la caisse, le conduit rendant apte le stockage en énergie, la caisse comprend une ouverture (10) dans laquelle est disposé le dispositif (1) de fixation, **caractérisé en ce que** le dispositif (1) de fixation comprend un support (15) et un renfort (16) intérieur de support, le support (15) étant disposé dans une ouverture (10) d'un côté latéral de caisse, le renfort (16) étant disposé dans une ouverture (160) du support (15), **caractérisé en ce que** le support (15) comprend un bord périphérique (151) de profil sensiblement rectangulaire au quatre coins duquel s'étend un bossage (156) s'étendant en saillie transversale hors d'un embouti délimitant une paroi de fond (155) dans laquelle est ménagée l'ouverture (160) du support (15).

2. Agencement selon la revendication 1, **caractérisé en ce que** le support (15) est lié à l'ouverture (10) de côté de caisse (11) par l'intermédiaire d'au moins un cordon de mastic d'étanchéité (4).

3. Agencement selon la revendication 1 ou 2, **caractérisé en ce que** le renfort (16) comprend au moins une ouverture (163, 164) destinée à coopérer par complémentarité de forme avec une extrémité d'un conduit (2, 3) d'alimentation en carburant.

4. Agencement selon la revendication 3, **caractérisé en ce que** le renfort (16) comprend un embouti délimitant une paroi de fond (165) en cuvette par rapport à un contour (162) duquel s'étend radialement au moins une languette (161) de fixation du renfort (16) au support (15).

5. Agencement selon la revendication 4, **caractérisé en ce que** chaque languette (161) est approximativement plane en s'étendant dans un plan sensiblement parallèle à la paroi de fond (165) contre laquelle elle est destinée à venir en appui.

6. Agencement selon la revendication 5, **caractérisé en ce que** chaque languette (161) est disposée à empilement du support (15) selon un axe transversal, et **en ce que** chaque languette (161) s'étend linéairement entre deux bossages (156) adjacents.

7. Agencement selon la revendication 5 ou 6, **caractérisé en ce que** chaque languette (161) est liée par au moins un point de soudure à la paroi de fond (155) et/ou au moins un cordon de mastic d'étanchéité (5) et/ou au moins un cordon de mastic structurant (6).

8. Agencement selon l'une des revendications 5 à 7, **caractérisé en ce qu'**au moins une des languettes (161) est liée par au moins un point de soudure à la fois à la doublure de caisse (11) définissant un passage de roue arrière (13) du véhicule et au support (15).

9. Agencement selon l'une quelconque des revendications précédentes, **caractérisé en ce que** le renfort (16) est réalisé à partir d'une plaque d'acier d'épaisseur supérieure à l'épaisseur de la plaque d'acier du support (15), le renfort (16) ayant notamment une épaisseur d'environ 1,2 mm, le support (15) ayant notamment une épaisseur de 0,65 mm.

10. Véhicule, notamment une automobile, comportant une caisse délimitée par un côté latéral (11), **caractérisé en ce qu'**il comprend un agencement de caisse selon l'une quelconque des revendications précédentes.

## Patentansprüche

1. Anordnung einer Fahrzeugkarosserie (11), insbesondere einer Kraftfahrzeugkarosserie, die eine Vorrichtung (1) zur Befestigung mindestens einer Leitung (2, 3) an der Karosserie aufweist, wobei die Leitung die Speicherung von Energie ermöglicht und die Karosserie eine Öffnung (10) umfasst, in welcher die Vorrichtung (1) zur Befestigung angeordnet ist,
**dadurch gekennzeichnet, dass** die Vorrichtung (1) zur Befestigung einen Träger (15) und eine innere Aussteifung (16) des Trägers umfasst, wobei der Träger (15) in einer Öffnung (10) einer lateralen Seite der Karosserie angeordnet ist, wobei die Aussteifung (16) in einer Öffnung (160) des Trägers (15) angeordnet ist, **dadurch gekennzeichnet, dass** der Träger (15) einen Umfangsrand (151) mit im Wesentlichen rechteckigem Profil umfasst, an dessen vier Ecken sich eine Erhebung (156) erstreckt, die sich quer herausragend aus einem Stulpblech erstreckt, das eine Bodenwand (155) begrenzt, in welcher die Öffnung (160) des Trägers (15) ausgebildet ist.

2. Anordnung nach Anspruch 1, **dadurch gekennzeichnet, dass** der Träger (15) mit der Öffnung (10) der Seite der Karosserie (11) über wenigstens eine Raupe aus Dichtungsmastix (4) verbunden ist.

3. Anordnung nach Anspruch 1 oder 2, **dadurch gekennzeichnet, dass** die Aussteifung (16) wenigstens eine Öffnung (163, 164) umfasst, die dazu bestimmt ist, formschlüssig mit einem Ende einer Leitung (2, 3) zur Versorgung mit Kraftstoff zusammenzuwirken.

4. Anordnung nach Anspruch 3, **dadurch gekennzeichnet, dass** die Aussteifung (16) ein Stulpblech umfasst, das eine wannenförmige Bodenwand (165) begrenzt, wobei sich radial bezüglich einer Kontur (162) derselben wenigstens eine Zunge (161) zur Befestigung der Aussteifung (16) am Träger (15) erstreckt.

5. Anordnung nach Anspruch 4, **dadurch gekennzeichnet, dass** jede Zunge (161) annähernd eben ist, wobei sie sich in einer Ebene erstreckt, die im Wesentlichen parallel zu der Bodenwand (165) ist, an der sie zur Anlage kommen soll.

6. Anordnung nach Anspruch 5, **dadurch gekennzeichnet, dass** jede Zunge (161) auf dem Träger (15) entlang einer Querachse gestapelt angeordnet ist, und dadurch, dass sich jede Zunge (161) geradlinig zwischen zwei benachbarten Erhebungen (156) erstreckt.

7. Anordnung nach Anspruch 5 oder 6, **dadurch gekennzeichnet, dass** jede Zunge (161) durch mindestens einen Schweißpunkt mit der Bodenwand (155) und/oder mit mindestens einer Raupe aus Dichtungsmastix (5) und/oder mit mindestens einer Raupe aus Strukturmasse (6) verbunden ist.

8. Anordnung nach einem der Ansprüche 5 bis 7, **dadurch gekennzeichnet, dass** mindestens eine der Zungen (161) durch mindestens einen Schweißpunkt gleichzeitig mit der Karosserieauskleidung (11), die einen Hinterradkasten (13) des Fahrzeugs definiert, und mit dem Träger (15) verbunden ist.

9. Anordnung nach einem der vorhergehenden Ansprüche, **dadurch gekennzeichnet, dass** die Aussteifung (16) aus einer Stahlplatte mit einer Dicke hergestellt ist, die größer als die Dicke der Stahlplatte des Trägers (15) ist, wobei die Aussteifung (16) insbesondere eine Dicke von ungefähr 1,2 mm aufweist und der Träger (15) insbesondere eine Dicke von ungefähr 0,65 mm aufweist.

10. Fahrzeug, insbesondere Kraftfahrzeug, welches eine von einer lateralen Seite begrenzte Karosserie (11) aufweist, **dadurch gekennzeichnet, dass** es eine Karosserieanordnung nach einem der vorhergehenden Ansprüche umfasst.

## Claims

1. Arrangement of a vehicle body (11), particularly a motor vehicle, comprising a device (1) for attaching at least one conduit (2, 3) to the body, the conduit allowing energy storage, the body comprising an opening (10) in which the attaching device (1) is arranged, **characterized in that** the attaching device (1) comprises a support (15) and a supporting inner reinforcement (16), the support (15) being arranged in an opening (10) in a lateral side of the body, the reinforcement (16) being arranged in an opening (160) in the support (15), **characterized in that** the support (15) comprises a peripheral edge (151) with a substantially rectangular profile with four corners from which extends a boss (156) protruding transversely out from a pressing defining a bottom wall (155) in which the opening (160) in the support (15) is made.

2. Arrangement according to Claim 1, **characterized in that** the support (15) is connected to the opening (10) in the body side (11) by means of at least one bead of sealant (4).

3. Arrangement according to Claim 1 or 2, **characterized in that** the reinforcement (16) comprises at least one opening (163, 164) suitable for being form-fitted to an end of a fuel supply conduit (2, 3).

4. Arrangement according to Claim 3, **characterized in that** the reinforcement (16) comprises a pressing defining a bottom wall (165) that is dished relative to an outline (162) from which at least one tab (161) for attaching the reinforcement (16) to the support (15) extends radially.

5. Arrangement according to Claim 4, **characterized in that** each tab (161) is approximately flat, extending in a plane substantially parallel to the bottom wall (165) against which it is intended to press.

6. Arrangement according to Claim 5, **characterized in that** each tab (161) is arranged layered on the support (15) along a transverse axis, and **in that** each tab (161) extends linearly between two adjacent bosses (156) .

7. Arrangement according to Claim 5 or 6, **characterized in that** each tab (161) is connected to the bottom wall (155) by at least one spot weld and/or at least one bead of sealant (5) and/or at least one bead of structural putty (6).

8. Arrangement according to one of Claims 5 to 7, **characterized in that** at least one of the tabs (161) is connected by at least one spot weld both to the inner panel of the body (11) defining a rear wheel arch (13) of the vehicle and to the support (15).

9. Arrangement according to any one of the preceding claims, **characterized in that** the reinforcement (16) is made from a steel plate that is thicker than the steel plate of the support (15), the reinforcement (16) particularly having a thickness of approximately 1.2 mm, the support (15) particularly having a thickness of 0.65 mm.

10. Vehicle, particularly a motor vehicle, comprising a body delimited by a lateral side (11), **characterized in that** it comprises a body arrangement according to any one of the preceding claims.
